# EUROPEAN PATENT SPECIFICATION

(11) **EP 3 518 021 B1**
(45) Date of publication and mention of the grant of the patent: **09.06.2021**
(21) Application number: 17852888.1
(22) Date of filing: 12.09.2017
(51) Int. Cl.: G02B 27/01, B60K 35/00, G02B 1/118, B32B 17/10

(54) **HEAD-UP DISPLAY DEVICE**
HEAD-UP-ANZEIGEVORRICHTUNG
DISPOSITIF D'AFFICHAGE TÊTE HAUTE

(30) Priority: 21.09.2016 JP 2016183914
(43) Date of publication of application: 31.07.2019
(73) Proprietor: Nippon Seiki Co., Ltd., Nagaoka-shi, Niigata 940-8580 (JP)
(72) Inventor: KANEKO Bunkichi, Nagaoka Niigata (JP); TANAKA, Katsuhiro, Nagaoka Niigata (JP)
(74) Representative: Carpmaels & Ransford LLP
(86) International application number: PCT/JP2017/032807
(87) International publication number: WO 2018/056111

(56) References cited:
- WO-A1-2012/042793
- JP-A- 2003 222 701
- JP-A- 2007 069 771
- JP-A- 2007 069 771
- JP-A- 2016 102 871
- JP-A- 2016 143 019
- JP-A- 2016 143 019
- JP-U- S63 156 834
- US-A1- 2009 303 604
- US-A1- 2011 285 934
- US-A1- 2017 038 584

## Description

### TECHNICAL FIELD

The present invention relates to a head-up display device.

### BACKGROUND ART

Conventionally, a head-up display device is known that comprises a display that emits a display light, and an optical system comprising a concave mirror that guides the display light to a projection member such as a windshield, and the like. A viewer can receive the display light reflected on the projection member and view a virtual image corresponding the display light. This head-up display device comprises a housing that has an opening through which display light that has passed through the optical system passes, and that houses the display and the optical system and the like, and a translucent cover member that covers this opening and transmits the display light that has passed through the optical system, as described in Patent Literature 1, for example.

### CITATION LIST

### PATENT LITERATURE

Patent Literature 1: Japanese Patent Application Publication No. 2016-061978

JP 2016 143019 A describes a housing having a frame part having an opening, and a translucent plate which is integrally formed with the frame part. A display panel is accommodated in the housing, and is visually recognized from the opening. An optical film is stuck to a rear surface of the translucent plate. Near the opening, the rear surface of the translucent plate protrudes more inside the housing than the frame part, or is flush with the frame part. The optical film is wider than the rear surface of the translucent plate.

US 2011/285934 A1 describes a direct-viewing type display device including: a display panel which has a display region and a frame region provided outside the display region; and a light-transmitting cover provided on a viewer's side of the display panel. The light-transmitting cover includes a lens portion positioned so as to overlap a region that includes part of the frame region of the display panel and part of a peripheral display region within the display region which adjoins the part of the frame region. The display device further includes a housing which has a housing portion provided at least on a side surface of the display panel. Part of light going out from the part of the peripheral display region and/or part of light entering the housing portion on a rear side goes out on a viewer's side of the housing portion.

JP 2007 069771 A describes a head-up display device for a vehicle provided with a device body integrated with air-conditioning ducts, and the device body comprises a dust cover having translucency, an indicator emitting indication lights indicating information, and reflection mirrors reflecting the indication lights from the indicator toward a windshield through the dust cover. An anti-fogging film having translucency and water absorption property is formed on at least one of an inner face of the dust cover and reflection faces of the reflection mirrors.

### SUMMARY OF THE INVENTION

The invention is set forth in the appended set of claims.

### BRIEF DESCRIPTION OF THE DRAWINGS

Fig. 1 is a schematic diagram of a vehicle equipped with a head-up display device according to one embodiment of the present invention.
Fig. 2 is a schematic view showing a configuration of a head-up display device according to one embodiment of the present invention.
Fig. 3 is a sectional view of a translucent cover member.
Fig. 4 is a front view of a translucent cover member.
Fig. 5 is a schematic view of when a base material is manufactured.
Fig. 6 is a schematic view of when a hard coat layer is laminated to a base material.
Fig. 7 is a schematic view of when a moth eye layer is laminated to a base material.
Fig. 8 is a schematic view of when an intermediate product in which a base material, a moth eye layer, and a hard coat layer have been laminated is cut.
Fig. 9 is a sectional view of a translucent cover member according to background art.

### MODE FOR CARRYING OUT THE INVENTION

One embodiment of a head-up display device comprising a translucent cover member for a head-up display device according to the present invention will be described with reference to the drawings.

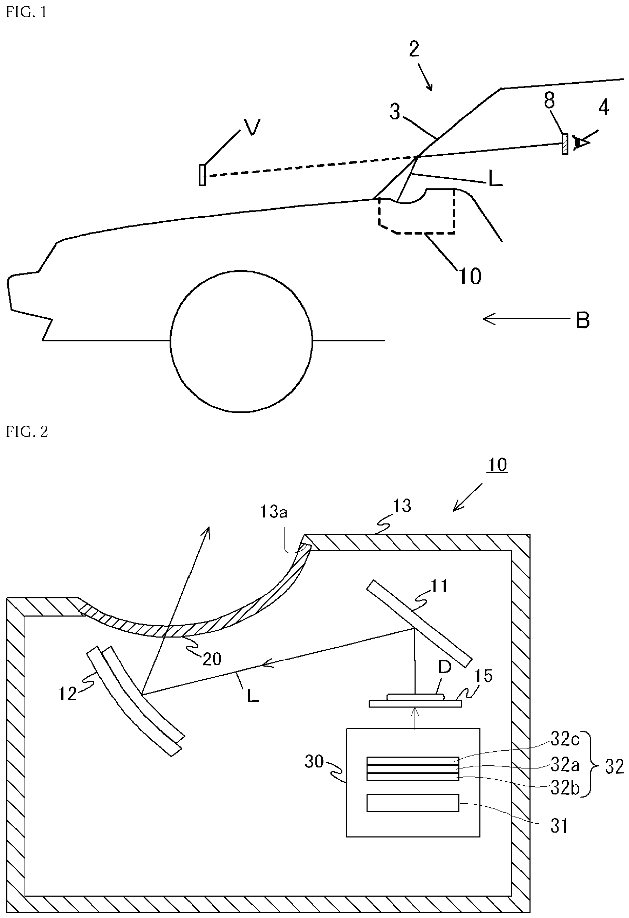

As shown in Fig. 1, a head-up display device 10 is arranged in a dashboard of a vehicle 2. The head-up display device 10 generates a display light L representing vehicle information, and emits the generated display light L toward a windshield 3 that is one example of a projection member. This display light L is reflected by the windshield 3 and reaches a viewer (for example, a driver of a vehicle) 4. As a result, the viewer 4 is able to see a virtual image V representing vehicle information formed in front of the windshield 3.

### (Configuration of head-up display device 10)

The head-up display device 10 comprises a flat mirror 11, a concave mirror 12, a housing 13, a display 30, a transparent screen 15, and a translucent cover member 20, as shown in Fig. 2.

The housing 13 is made of light-blocking resin and is formed in a rectangular parallelepiped box shape. Various components of the head-up display device 10 are housed inside the housing 13. An opening 13a, which is a through-hole through which the display light L passes, is formed in the housing 13.

The display 30 emits the display light L representing vehicle information. The display 30 comprises a backlight light source 31 that irradiates a light, and a liquid crystal panel 32 that receives the light from the backlight light source 31 and emits the display light L. The liquid crystal panel 32 comprises a liquid crystal layer 32a, a first polarizer 32b, and a second polarizer 32c. The first polarizer 32b, the liquid crystal layer 32a, and the second polarizer 32c are laminated in this order from the incidence side of the light from the backlight light source 31.

The first polarizer 32b is positioned on the back side of the liquid crystal layer 32a, and emits only light in a vibration direction along its own transmission axis, of the light incident from the backlight light source 31, to the liquid crystal layer 32a side.

The liquid crystal layer 32a is a layer within which liquid crystal is sealed, and causes the vibration direction of light to change on the basis of an instruction from a control unit, not shown. The liquid crystal layer 32a is positioned between the first polarizer 32b and a second polarizer 32c.

The second polarizer 32c is positioned on the front side of the liquid crystal layer 32a, and emits, as the display light L, only light in a vibration direction along its own transmission axis, of the light from the liquid crystal layer 32a. For example, the transmission axes of both polarizers 22b and 22c are set to a direction orthogonal to each other as viewed from the front of the display 30. In this case, the liquid crystal layer 32a causes the vibration direction of the light to align with the transmission axis of the second polarizer 32c by rotating the vibration direction of the light 90 degrees at a predetermined pixel of the liquid crystal panel 32. As a result, the light passes through the second polarizer 32c at the predetermined pixel. Also, the liquid crystal layer 32a causes the vibration direction of the light to align with an absorption axis that is orthogonal to the transmission axis of the second polarizer 32c by not allowing the vibration direction of the light to rotate at a predetermined pixel of the liquid crystal panel 32. As a result, the light does not pass through the second polarizer 32c but is absorbed at the predetermined pixel. In this way, the display light L representing a display image can be caused to be emitted from the liquid crystal panel 32 by the transmission or absorption of a light M being controlled for each pixel of the liquid crystal panel 32.

The transparent screen 15 receives the display light L from the display 30 and forms an image D, and emits the display light L representing this image D to the flat mirror 11. The flat mirror 11 reflects the display light L representing the image D from the transparent screen 15 toward the concave mirror 12. The concave mirror 12 reflects the display light L from the flat mirror 11 toward the windshield 3. This display light L passes through the translucent cover member 20 of the housing 13 and reaches the windshield 3.

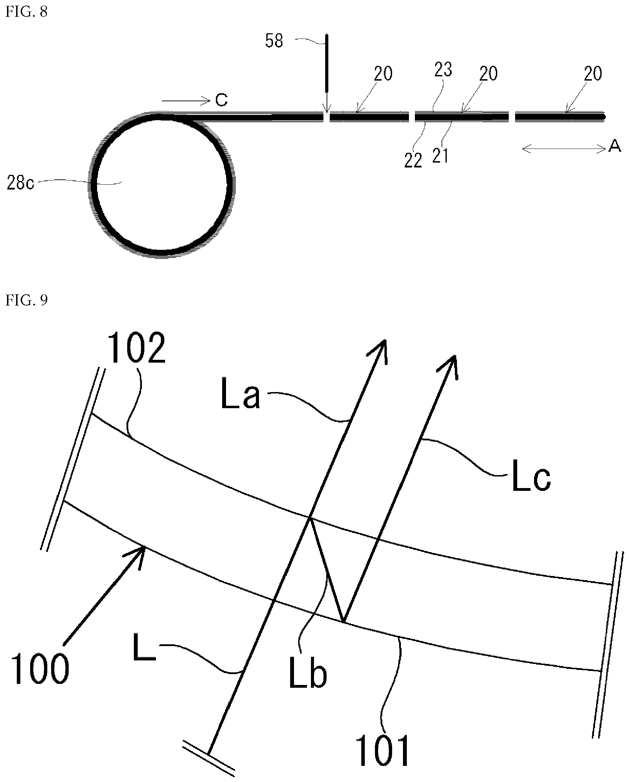

The translucent cover member 20 is provided so as to block the opening 13a of the housing 13, as shown in Fig. 2. The translucent cover member 20 is formed in a curved plate shape in order to suppress outside light that has reached the translucent cover member 20 from being reflected toward the viewer 4. The translucent cover member 20 is flexible so as to be able to be wound around the outer circumference of a third winding shaft 28c that will be described later, as shown in Fig. 8.

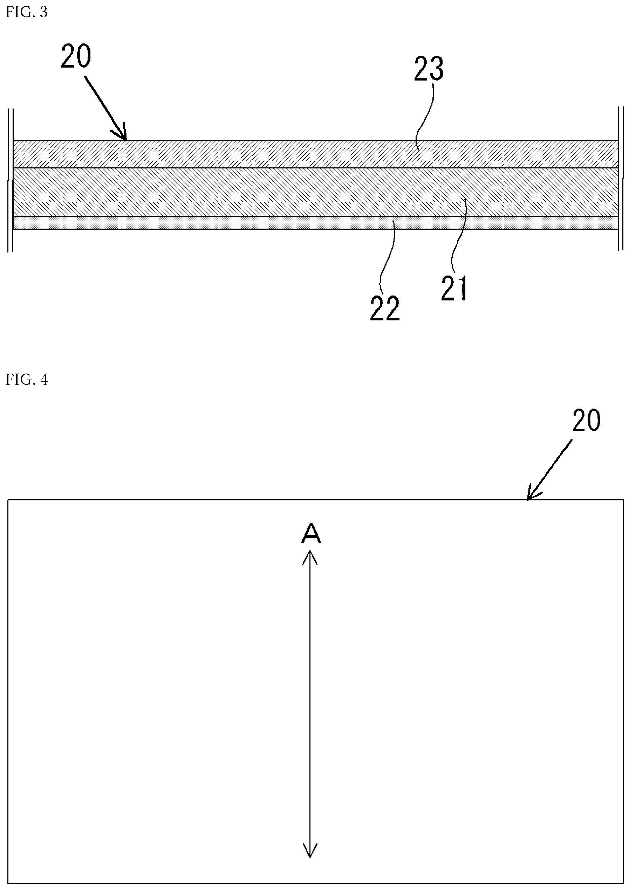

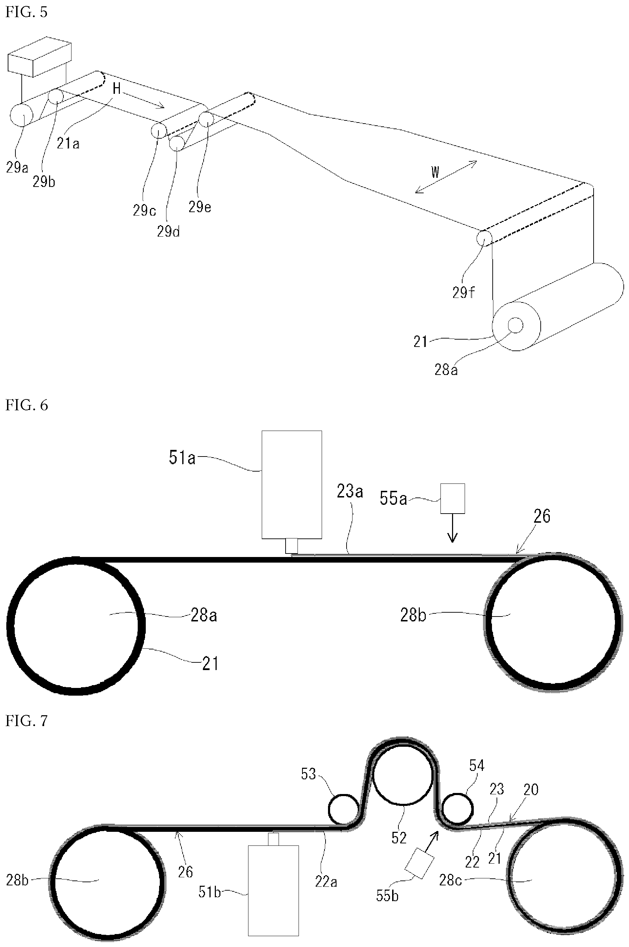

Here, a predetermined optical anisotropy occurs in the process of manufacturing the translucent cover member 20 by stretching the base material 21 and winding the base material 21 around winding shafts 28a to 28c. Therefore, depending on the orientation of the translucent cover member 20, the display luminance of the virtual image V decreases when the viewer 4 views the virtual image V through polarized sunglasses 8. In this regard, according to the invention, the translucent cover member 20 is disposed at an orientation in which the display luminance of the virtual image V will not decrease when the viewer 4 views the virtual image V through polarized sunglasses 8. More specifically, the translucent cover member 20 has a display luminance reduction suppressing axis A, as shown in Fig. 4. The translucent cover member 20 is disposed at the opening 13a of the housing 13 such that this display luminance reduction suppressing axis A is along a virtual image viewing direction B (see Fig. 1) that is a direction from which viewer 4 views the virtual image V formed in front of the windshield 3. In other words, the translucent cover member 20 is disposed at the opening 13a of the housing 13 such that a direction C in which the translucent cover member 20 is unwound from a state wound around the third winding shaft 28c is along the virtual image viewing direction B, as shown in Fig. 8 that will be referred to later. Furthermore, in other words, the translucent cover member 20 is disposed in the housing 13 such that a longitudinal stretching direction H when the base material 21 is stretched in the longitudinal direction is along the virtual image viewing direction B, as shown in Fig. 5 that will be referred to later. As a result, a decrease in the display luminance of the virtual image V is suppressed when the viewer 4 views the virtual image V through polarized sunglasses 8.

More specifically, the translucent cover member 20 comprises the base material 21, the moth eye layer 22, and the hard coat layer 23, as shown in Fig. 3.

The base material 21 is made of an optically transparent polycarbonate resin. Polycarbonate resin has higher flexibility than acrylic resin.

The moth eye layer 22 is made of, for example, an ultraviolet curable resin having a fine uneven structure of nanometer size and has a reflection suppressing characteristic. This reflection suppressing characteristic suppresses the virtual image V from becoming a double image.

The hard coat layer 23 protects the base material 21 from becoming scratched. The hard coat layer 23 is made of an optically transparent resin. The hard coat layer 23 is positioned on the display light L emission side of the base material 21, that is, on the front side of the base material 21.

As an example, the thickness of the base material 21 is set at 390 µm, the thickness of the moth eye layer 22 is set at 4 µm, and the thickness of the hard coat layer 23 is set at 10 µm.

### (Manufacturing method of translucent cover member 20)

Next, a manufacturing method of the translucent cover member 20 will be described.

First, a sheet material 21a is formed by a molten polycarbonate resin, which is the raw material of the base material 21, being stretched, as shown in Fig. 5. The sheet material 21a has a rectangular shape. The sheet material 21a is sequentially fed toward the first winding shaft 28a by a plurality of rollers 29a to 29f in the longitudinal direction of the sheet material 21a. The sheet material 21a is stretched by a molten two-axis stretching method that is well-known technology. More specifically, the sheet material 21a is stretched in the longitudinal stretching direction H between a pair of rollers 29b and 29c, and the sheet material 21a is stretched in a transverse stretching direction W between a pair of rollers 29e and 29f. As a result, the base material 21 is manufactured, and this base material 21 is wound around the first winding shaft 28a. The longitudinal stretching direction H is along the longitudinal direction of the sheet material 21a, and the transverse stretching direction W is along the transverse direction of the sheet material 21a.

The translucent cover member 20 is manufactured from the base material 21 by a manufacturing apparatus, as shown in Fig. 6 to Fig. 8. This manufacturing apparatus comprises a first resin supply portion 51a and a first ultraviolet light emitting portion 55a, shown in Fig. 6, a second resin supply portion 51b, a roll mold 52, a press roller 53, a peeling roller 54, and a second ultraviolet light emitting portion 55b, shown in Fig. 7, and a cutter 58 shown in Fig. 8.

As shown in Fig. 6, the first resin supply portion 51a and the first ultraviolet light emitting portion 55a form the hard coat layer 23 on the front surface of the base material 21. More specifically, the first resin supply portion 51a ejects an ultraviolet curable resin 23a serving as the raw material of the hard coat layer 23 onto the front surface of the base material 21 that has been unwound from the first winding shaft 28a. The first ultraviolet light emitting portion 55a irradiates ultraviolet light at the supplied resin 23a, thereby curing the resin 23a. As a result, an intermediate product 26 comprising the hard coat layer 23 and the base material 21 is manufactured. The intermediate product 26 is wound around the outer circumference of the second winding shaft 28b.

As shown in Fig. 7, the second resin supply portion 51b, the roll mold 52, the press roller 53, and the peeling roller 54 form the moth eye layer 22 on the back surface of the base material 21. More specifically, the second resin supply portion 51b ejects an ultraviolet curable resin 22a onto the back surface of the intermediate product 26 that has been unwound from the second winding shaft 28b. The roll mold 52 has an uneven portion, not shown, for forming the uneven structure of the moth eye layer 22, on the outer peripheral surface of the roll mold 52. The press roller 53 is positioned between the second resin supply portion 51b and the roll mold 52, and causes the outer peripheral surface of the roll mold 52 to closely contact the resin 22a formed on the back surface of the base material 21, by applying tension to the base material 21. As a result, the uneven portion, not shown, that is described above, of the roll mold 52 is transferred to the resin 22a. The second ultraviolet light emitting portion 55b irradiates ultraviolet light at the resin 22a in which the uneven structure is formed, thereby curing the resin 22a. This cured resin 22a is the moth eye layer 22. As a result, translucent cover member 20 comprising the moth eye layer 22, the hard coat layer 23, and the base material 21 is manufactured. The peeling roller 54 causes the translucent cover member 20 to peel away from the roll mold 52, by applying tension to the translucent cover member 20 from the roll mold 52. Also, the translucent cover member 20 is wound around the outer circumference of the cylindrical third winding shaft 28c.

As shown in Fig. 8, the cutter 58 forms the translucent cover member 20 into a desired size by cutting the translucent cover member 20 that has been unwound from the third winding shaft 28c. This completes the manufacture of the translucent cover member 20.

### (Effects)

According to the embodiment described above, the following effects are obtained.

(1) The translucent cover member 20 covers the opening 13a of the housing 13, and the display light L passes therethrough. The translucent cover member 20 comprises the base material 21 made of translucent resin, and the moth eye layer 22 that is formed on the display light L incidence side of the base material 21 and suppresses the reflection of light.

According to this configuration, the display light L is suppressed by the moth eye layer 22 from being reflected. Therefore, the virtual image V is suppressed from becoming a double image.

Also, if a moth eye film is affixed to the back surface of a translucent cover member, wrinkles appear when the moth eye film is affixed or due to deterioration with aging, and as a result, the display quality of the virtual image deteriorates, which is problematic. With this in mind, in the embodiment described above, the moth eye layer 22 is not a moth eye film, but is made of ultraviolet curable resin. Therefore, this problem will not occur, so it is possible to suppress deterioration of the display quality of the virtual image.

(2) The translucent cover member 20 further comprises the hard coat layer 23 that is formed on the display light L emission side of the base material 21, and protects the base material 21. Also, the base material 21 is made of polycarbonate resin.

According to this configuration, the base material 21 is made of polycarbonate resin that is more flexible than acrylic resin. Therefore, when manufacturing the translucent cover member 20, the hard coat layer 23 and the moth eye layer 22 can be formed while feeding the base material 21 with the winding shafts 28a to 28c. As a result, the manufacturing efficiency of the translucent cover member 20 can be improved.

Also, the base material 21 is made of polycarbonate resin that is softer than acrylic resin, but damage to the base material 21 is suppressed by the hard coat layer 23 being formed.

(3) The head-up display device 10 comprises the translucent cover member 20, the housing 13 having the opening 13a, the display 30 that emits the display light L, and the flat mirror 11 and the concave mirror 12 that comprise the optical system that displays the virtual image V by guiding the display light L from the display 30 to the windshield 3. The translucent cover member 20 has the display luminance reduction suppressing axis A, and this display luminance reduction suppressing axis A is set in a direction along the virtual image viewing direction B. According to this configuration, the display luminance of the virtual image V will not decrease, so deterioration of the display quality of the virtual image is suppressed.

(4) The translucent cover member 20 is disposed in the housing 13 such that the direction C in which the translucent cover member 20 is unwound from a state wound around the third winding shaft 28c is along the virtual image viewing direction B.

According to this configuration, it is possible to suppress a decrease in the display luminance of the virtual image V when the viewer 4 views the virtual image V through polarized sunglasses 8. As a result, deterioration of the display quality of the virtual image V is suppressed.

(5) The translucent cover member 20 is disposed in the housing 13 such that the longitudinal stretching direction H when the base material 21 is stretched in the longitudinal direction by the molten two-axis stretching method is along the virtual image viewing direction B.

According to this configuration, it is possible to suppress a decrease in the display luminance of the virtual image V when the viewer 4 views the virtual image V through polarized sunglasses 8. As a result, deterioration of the display quality of the virtual image V is suppressed.

### (Modified example)

Note that the embodiment described above can be carried out in the following modes that have been appropriately modified.

In the embodiment described above, the translucent cover member 20 comprises the base material 21, the moth eye layer 22, and the hard coat layer 23, but the hard coat layer 23 may be omitted.

In the embodiment described above, the base material 21 is made of polycarbonate resin, but the base material 21 may be made of another resin such as acrylic resin.

The manufacturing method of the translucent cover member 20 described above can be modified as appropriate. For example, the moth eye layer 22 may be affixed as a film to the back surface of the base material 21. Also, the moth eye layer 22 and the hard coat layer 23 are made of ultraviolet curable resin, but the moth eye layer 22 and the hard coat layer 23 may be made of thermosetting resin. The moth eye layer 22 and the hard coat layer 23 may be fixed to the base material 21 via an adhesive.

The head-up display device 10 in the embodiment described above is a head-up display device to be mounted in a vehicle, but is not limited to a head-up display device to be mounted in a vehicle, and may be a head-up display device to be mounted in a conveyance such as an aircraft or a watercraft. Also, the projection member is not limited to a windshield, and may be a dedicated combiner.

### INDUSTRIAL APPLICABILITY

The present invention is applicable to a head-up display device to be mounted in a vehicle.

### DESCRIPTION OF REFERENCE NUMERALS

- 3: Windshield
- 8: Polarized sunglasses
- 10: Head-up display device
- 11: Flat mirror
- 12: Curved mirror
- 13: Housing
- 13a: Opening
- 15: Transparent screen
- 20: Translucent cover member
- 21: Base material
- 21a: Sheet material
- 22: Moth eye layer
- 23: Hard coat layer
- 26: Intermediate product
- 28a: First winding shaft
- 28b: Second winding shaft
- 28c: Third winding shaft
- 29a to 29f: Roller
- 30: Display
- 31: Backlight light source
- 32: Liquid crystal panel
- 32a: Liquid crystal layer
- 32b: First polarizer
- 32c: Second polarizer
- 51a: First resin supply portion
- 51b: Second resin supply portion
- 52: Roll mold
- 53: Press roller
- 54: Peeling roller
- 55a: First ultraviolet light emitting portion
- 55b: Second ultraviolet light emitting portion
- 58: Cutter

## Claims

1. A head-up display device (10) comprising:
a housing (13) having an opening (13a);
a display (30) that is configured to display a virtual image (V) by emitting a display light (L) onto a projection member (15);
a translucent cover member (20) which covers the opening (13a) of the housing (13) and is configured to transmit the display light, wherein the translucent cover member (20) comprises:
a base material (21) made of a translucent resin; and
**characterized by** a moth eye layer (22) that is formed on the display light incidence side of the base material (21) and suppresses reflection of light, and
wherein the translucent cover member (20) has a display luminance reduction suppressing axis (A), and wherein the display luminance reduction suppressing axis (A) is set in a direction along a virtual image viewing direction (B) such that the display luminance of the virtual image (V) will not decrease when the viewer (4) views the image (V) through polarized sunglasses (8).

2. The head-up display device according to claim 1, wherein the translucent cover member (20) further comprises:
a hard coat layer (23) that is formed on the display light emission side of the base material (21) and protects the base material (21), and
wherein the base material (21) is made of a polycarbonate resin.

3. The head-up display device (10) according to claim 1, wherein
the head-up display (10) is mounted in a vehicle (2), and
the translucent cover member (20) is disposed in the housing (13) such that a direction in which the translucent cover member (20) is unwound from a state wound around a winding shaft (28a) is along the virtual image viewing direction (B).

4. The head-up display device (10) according to claim 1, wherein
the head-up display (10) is mounted in a vehicle (2), and
the translucent cover member (20) is disposed in the housing (13) such that a longitudinal stretching direction in which the base material (21) is stretched in a longitudinal direction is along the virtual image viewing direction (B).

## Patentansprüche

1. Head-up-Anzeigevorrichtung (10), umfassend:
ein Gehäuse (13) mit einer Öffnung (13a);
eine Anzeige (30), die konfiguriert ist, ein virtuelles Bild (V) durch Emittieren eines Anzeigelichts (L) auf ein Projektionselement (15) anzuzeigen;
ein lichtdurchlässiges Abdeckelement (20), das die Öffnung (13a) des Gehäuses (13) abdeckt und konfiguriert ist, das Anzeigelicht durchzulassen, wobei das lichtdurchlässige Abdeckelement (20) umfasst:
ein Basismaterial (21), das aus einem lichtdurchlässigen Harz hergestellt ist; und
**gekennzeichnet durch**
eine Mottenaugenschicht (22), die auf der Anzeigelichteinfallsseite des Basismaterials (21) gebildet ist und die Reflexion von Licht unterdrückt, und
wobei das lichtdurchlässige Abdeckelement (20) eine Anzeigeluminanzreduzierung-Unterdrückungsachse (A) aufweist und wobei die Anzeigeluminanzreduzierung-Unterdrückungsachse (A) in einer Richtung entlang einer Betrachtungsrichtung (B) eines virtuellen Bildes derart eingestellt ist, dass die Anzeigeluminanz des virtuellen Bildes (V) nicht abnimmt, wenn der Betrachter (4) das Bild (V) durch eine polarisierte Sonnenbrille (8) betrachtet.

2. Head-up-Anzeigevorrichtung nach Anspruch 1, wobei das lichtdurchlässige Abdeckelement (20) ferner umfasst:
eine harte Überzugsschicht (23), die auf der Anzeigelichtaustrittsseite des Basismaterials (21) gebildet ist und das Basismaterial (21) schützt, und
wobei das Basismaterial (21) aus einem Polycarbonatharz hergestellt ist.

3. Head-up-Anzeigevorrichtung (10) nach Anspruch 1, wobei
die Head-up-Anzeige (10) in einem Fahrzeug (2) montiert ist und
das lichtdurchlässige Abdeckelement (20) in dem Gehäuse (13) derart angeordnet ist, dass eine Richtung, in der das lichtdurchlässige Abdeckelement (20) aus einem um eine Wickelwelle (28a) gewickelten Zustand abgewickelt wird, entlang der Betrachtungsrichtung (B) des virtuellen Bilds liegt.

4. Head-up-Anzeigevorrichtung (10) nach Anspruch 1, wobei
die Head-up-Anzeige (10) in einem Fahrzeug (2) montiert ist und
das lichtdurchlässige Abdeckelement (20) in dem Gehäuse (13) derart angeordnet ist, dass eine Längsstreckungsrichtung, in der das Basismaterial (21) in einer Längsrichtung gestreckt wird, entlang der Betrachtungsrichtung (B) des virtuellen Bilds liegt.

## Revendications

1. Dispositif d'affichage tête haute (10) comprenant :
un boîtier (13) ayant une ouverture (13a) ;
un écran (30) qui est configuré pour afficher une image virtuelle (V) en émettant une lumière d'affichage (L) sur un élément de projection (15) ;
un élément de recouvrement translucide (20) qui recouvre l'ouverture (13a) du boîtier (13) et est configuré pour transmettre la lumière d'affichage, l'élément de recouvrement translucide (20) comprenant :
un matériau de base (21) constitué d'une résine translucide ; et
**caractérisé par**
une couche en œil de papillon (22) qui est formée sur le côté d'incidence de la lumière d'affichage du matériau de base (21) et supprime la réflexion de la lumière, et
dans lequel l'élément de recouvrement translucide (20) a un axe supprimant la réduction de luminance d'affichage (A), et dans lequel l'axe supprimant la réduction de luminance d'affichage (A) est défini dans une direction le long d'une direction d'observation de l'image virtuelle (B) de telle sorte que la luminance d'affichage de l'image virtuelle (V) ne diminuera pas quand l'observateur (4) observera l'image (V) à travers des lunettes de soleil polarisées (8).

2. Dispositif d'affichage tête haute selon la revendication 1, dans lequel l'élément de recouvrement translucide (20) comprend en outre :
une couche de revêtement dur (23) qui est formée sur le côté d'émission de la lumière d'affichage du matériau de base (21) et protège le matériau de base (21), et
dans lequel le matériau de base (21) est constitué d'une résine de polycarbonate.

3. Dispositif d'affichage tête haute (10) selon la revendication 1, dans lequel
l'afficheur tête haute (10) est monté dans un véhicule (2), et
l'élément de recouvrement translucide (20) est disposé dans le boîtier (13) de telle sorte qu'une direction dans laquelle l'élément de recouvrement translucide (20) est déroulé à partir d'un état enroulé autour d'un arbre enrouleur (28a) est le long de la direction d'observation de l'image virtuelle (B).

4. Dispositif d'affichage tête haute (10) selon la revendication 1, dans lequel
l'afficheur tête haute (10) est monté dans un véhicule (2), et
l'élément de recouvrement translucide (20) est disposé dans le boîtier (13) de telle sorte qu'une direction longitudinale de tension dans laquelle le matériau de base (21) est tendu dans une direction longitudinale est le long de la direction d'observation de l'image virtuelle (B).
